# EUROPEAN PATENT SPECIFICATION

(11) **EP 2 983 081 B1**
(45) Date of publication and mention of the grant of the patent: **04.12.2019**
(21) Application number: 15180010.9
(22) Date of filing: 06.08.2015
(51) Int. Cl.: G06F 3/0488, G06F 3/0482

(54) **METHOD AND DEVICE FOR LIST UPDATING**
VERFAHREN UND VORRICHTUNG ZUR LISTENAKTUALISIERUNG
PROCÉDÉ ET DISPOSITIF POUR LA MISE À JOUR DE LISTES

(30) Priority: 06.08.2014 CN 201410384387
(43) Date of publication of application: 10.02.2016
(73) Proprietor: Xiaomi Inc., Beijing 100085 (CN)
(72) Inventor: GAO, Yi, 100085 BEIJING (CN); WANG, Hongqiang, 100085 BEIJING (CN); LONG, Hai, 100085 BEIJING (CN)
(74) Representative: Delumeau, François Guy

(56) References cited:
- EP-A1- 2 743 817
- CN-A- 102 768 617
- KR-A- 20130 104 278
- US-A1- 2010 162 179
- US-A1- 2010 199 180
- US-A1- 2012 013 540
- US-A1- 2013 227 486

## Description

### TECHNICAL FIELD

The present disclosure generally relates to the field of computer and internet technology, and more particularly, to a method and a device for list updating.

### BACKGROUND

When an application program is loading data, a typical displaying method is displaying data in a list form. A list typically contains a plurality of list items arranged in order along a longitudinal direction or a transverse direction, and each of the list items corresponds to a set of list data.

Documents KR 2013 0104278 A and EP 2 743 817 A1 disclose methods for updating list of items.

Document US 2013/0227486 A1 describes an electronic apparatus with a touch screen which executes the following steps: a list of scrollable items is displayed; a movement of an object on or near the touch screen display is detected; in response to an edge of the list being reached, items are moved in a first direction to display one or more gaps, each gap being between the adjacent items and no gap being formed outside of the edge of the list; and the items are moved in a second direction until the gaps are no longer displayed.

A user may browse list data corresponding to each of the list items in the order of the items by scrolling the lists. When an application program prompts the user that there is new list data, the user may swipe up and down to scroll to the top or the bottom of the lists. Then list item update corresponding to the list data for updating may be loaded in front of the first list item among the lists before the updating or next to the last list item among the lists before the updating. For instance, when a user browses micro-blogs, each micro-blog corresponds to a list item. If the user attempts to refresh the micro-blogs, he typically needs to swipe the lists up to the first list item at the top, and draw down the lists to trigger list updating, and then the list items corresponding to the micro-blogs to be updated may be loaded and displayed in front of the first list item at the top.

During the implementation of the present disclosure, at least the following defects are found in the above-described method. Since a user needs to swipe lists to reach the top or the bottom of the lists to achieve list updating, this will affect the continuity in list data browsing, and the above operation for triggering list updating is complicated, which affects the updating efficiency.

### SUMMARY

The invention is defined in the appended set of claims.

In order to overcome the problem in the related arts that operation of triggering list updating is complicated, which affects updating efficiency and continuity in list data browsing, a method and a device for list updating are provided by embodiments of the present disclosure. The technical solutions are set forth below.

According to a first aspect, the disclosure relates to a method for list updating, comprising:

acquiring a triggering signal with respect to a first list item and a second list item adjacent to each other among N list items displayed in a current page, the triggering signal serving to trigger updating of list data, N≥2 and N being an integer; the step of acquiring a triggering signal comprising :
acquiring a tap signal acting upon a separation line in a first displaying state between the first list item and the second list item;
detecting whether the N list items are in a stationary state and if the N list items are in the stationary state :
   - displaying the separation line with a second displaying state upon the triggering of the tap signal;
   - acquiring a sliding signal acting upon the separation line in the second displaying state;
   - obtaining at least one list item update according to list data for updating; and
loading the at least one list item update between the first list item and the second list item.

In a particular embodiment, the step of acquiring a triggering signal with respect to a first list item and a second list item adjacent to each other among N list items displayed in a current page, comprises:
acquiring a first sliding signal acting upon the first list item and a second sliding signal acting upon the second list item.

In a particular embodiment, the first sliding signal is a sliding signal acting upon the first list item in a sliding direction away from the second list item, the second sliding signal is a sliding signal acting upon the second list item in a sliding direction away from the first list item, and a time difference between a triggering moment of the first sliding signal and a triggering moment of the second sliding signal is less than a predetermined time threshold.

In a particular embodiment, the method further comprises:
acquiring an instruction for rearranging M list items contained in the updated lists, M≥N+1 and M being an integer;
for each list item, acquiring a ranking parameter corresponding to the list item;
rearranging the M list items according to respective ranking parameters and a predetermined ranking condition;
wherein the predetermined ranking condition is for arranging the list items in an ascending order of the ranking parameters, or, the predetermined ranking condition is for arranging the list items in a descending order of the ranking parameters.

According to a second aspect, the disclosure relates to a device for list updating, comprising:
a signal acquiring module configured to acquire a triggering signal with respect to a first list item and a second list item adjacent to each other among N list items displayed in a current page, the triggering signal serving to trigger updating of list data, N≥2 and N being an integer;
the signal acquiring module comprising:
   a first acquiring sub-module configured to acquire a tap signal acting upon a separation line in a first displaying state between the first list item and the second list item;
   a list-item-detecting sub-module configured to, after the tap signal is received, detect whether the N list items are in a stationary state;
   a separation line displaying sub-module configured to if the N list items are in the stationary state, display the separation line with a second displaying state according to the tap signal; and
   a second acquiring sub-module configured to if the N list items are in the stationary state, acquire a sliding signal acting upon the separation line in the second displaying state,
   a list item generation module configured to, if the N list items are in the stationary state, obtain at least one list item update according to list data for updating; and
   a list item loading module configured to, if the N list items are in the stationary state, load the at least one list item update between the first list item and the second list item.

In a particular embodiment, the signal acquiring module comprises: a signal-acquiring sub-module configured to acquire a first sliding signal acting upon the first list item and a second sliding signal acting upon the second list item.

In a particular embodiment, the first sliding signal is a sliding signal acting upon the first list item in a sliding direction away from the second list item, the second sliding signal is a sliding signal acting upon the second list item in a sliding direction away from the first list item, and a time difference between a triggering moment of the first sliding signal and a triggering moment of the second sliding signal is less than a predetermined time threshold.

In a particular embodiment, the device further comprises:
an instruction acquiring module configured to acquire an instruction for rearranging M list items contained in the updated lists, M≥N+1 and M being an integer;
a parameter acquiring module configured to, for each list item, acquire a ranking parameter corresponding to the list item;
a list item rearranging module configured to rearrange the M list items according to respective ranking parameters and a predetermined ranking condition;
wherein the predetermined ranking condition is for arranging the list items in an ascending order of the ranking parameters, or, the predetermined ranking condition is for arranging the list items in a descending order of the ranking parameters.

According to a third aspect, the disclosure relates to a device for list updating, comprising:
a processor; and
a memory for storing instructions executable by the processor;
wherein the processor is configured to perform:
   acquiring a triggering signal with respect to a first list item and a second list item adjacent to each other among N list items displayed in a current page, the triggering signal serving to trigger updating of list data, N≥2 and N being an integer;
   wherein acquiring a triggering signal comprises:
      - acquiring a tap signal acting upon a separation line in a first displaying state between the first list item and the second list item;
      - detecting whether the N list items are in a stationary state and,
         if the N list items are in the stationary state:
         - displaying the separation line with a second displaying state according to the tap signal;
         - acquiring a sliding signal acting upon the separation line in the second displaying state;
         - obtaining at least one list item update according to list data for updating; and
         - loading the at least one list item update between the first list item and the second list item.

In one particular embodiment, the steps of the method of list updating are determined by computer program instructions.

Consequently, according to a fourth aspect, the invention is also directed to a computer program for executing the steps of a method of list updating when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The advantageous effects brought by the technical solutions provided by the embodiments of the present disclosure include the following:
Updating of list data is triggered by a triggering signal with respect to a first list item and a second list item adjacent to each other displayed in a current page, and at least one list item update is directly loaded between the above first list item and the second list item. The embodiments solve the problem in the related arts that the operation for triggering list updating is complicated, which affects the updating efficiency and influences the continuity in list data browsing. The embodiments simplify the operation for triggering list updating, and thereby improve the updating efficiency and can guarantee the continuity during list browsing.

It is to be understood that both the foregoing general description and the following detailed description are exemplary and explanatory only and are not restrictive of the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart of a method for list updating according to an exemplary embodiment;
Fig. 2A is a flow chart of a method for list updating according to another exemplary embodiment;
Fig. 2B is a schematic diagram of a user interface involved in a method for list updating according to another exemplary embodiment;
Fig. 3A is a flow chart of a method for list updating according to still another exemplary embodiment;
Fig. 3B is a schematic diagram of a user interface involved in a method for list updating according to still another exemplary embodiment;
Fig. 4 is a block diagram of a device for list updating according to an exemplary embodiment;
Fig. 5 is a block diagram illustrating a device for list updating according to another exemplary embodiment; and
Fig. 6 is a block diagram of a device according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of devices and methods consistent with aspects related to the invention as recited in the appended claims.

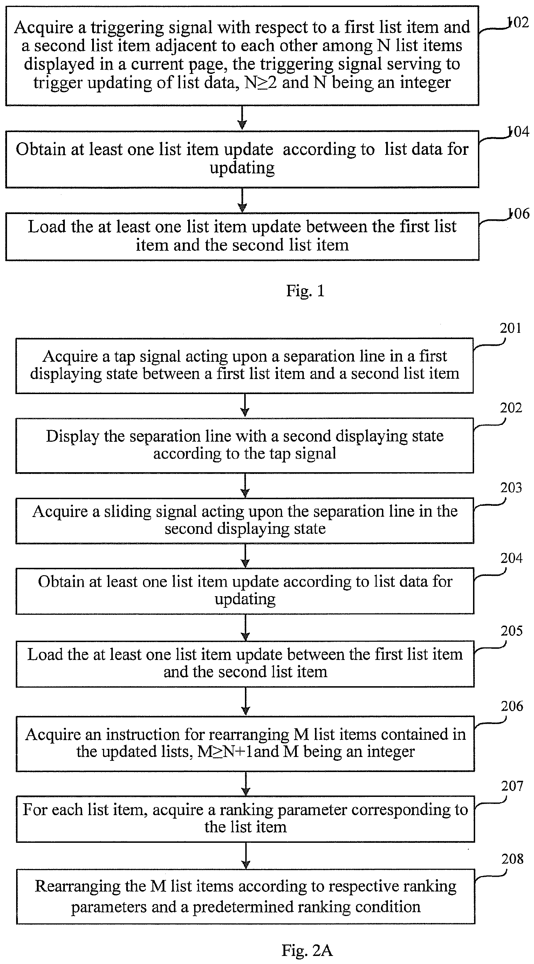

Fig. 1 is a flow chart of a method for list updating according to an exemplary embodiment. In the present embodiment, the method for list updating is for example applied in an electronic device such as a mobile phone, a tablet, an e-book reader, a multimedia player and a personal digital assistant and the like. The method for list updating may include the following steps.

In step 102, a triggering signal with respect to a first list item and a second list item adjacent to each other among N list items displayed in a current page is acquired. The triggering signal serves to trigger updating of list data, N≥2 and N is an integer.

In step 104, at least one list item update is obtained according to list data for updating.

In step 106, the at least one list item update is loaded between the first list item and the second list item.

Accordingly, in the method for list updating provided by the present embodiment, updating of list data is triggered by a triggering signal with respect to a first list item and a second list item adjacent to each other displayed in a current page, and at least one list item update is directly loaded between the above first list item and the second list item. The method solves the problem in the related arts that the operation for triggering list updating is complicated, which affects the updating efficiency and influences the continuity in list data browsing. The method simplifies the operation for triggering list updating, and thereby improves the updating efficiency and can guarantee the continuity during list browsing.

Fig. 2A is a flow chart of a method for list updating according to another exemplary embodiment. In the present embodiment, the method for list updating is for example applied in an electronic device such as a mobile phone, a tablet, an e-book reader, a multimedia player and a personal digital assistant and the like. The method for list updating may include the following steps.

In step 201, a tap signal acting upon a separation line in a first displaying state between a first list item and a second list item is acquired.

The first list item and the second list item are two adjacent list items among N list items displayed in a current page, N≥2, and N is an integer.

When a user is browsing list data in a plurality of list items contained in lists, if there is new list data to be updated, the electronic device generates and displays a prompt message for prompting the user for new list data.

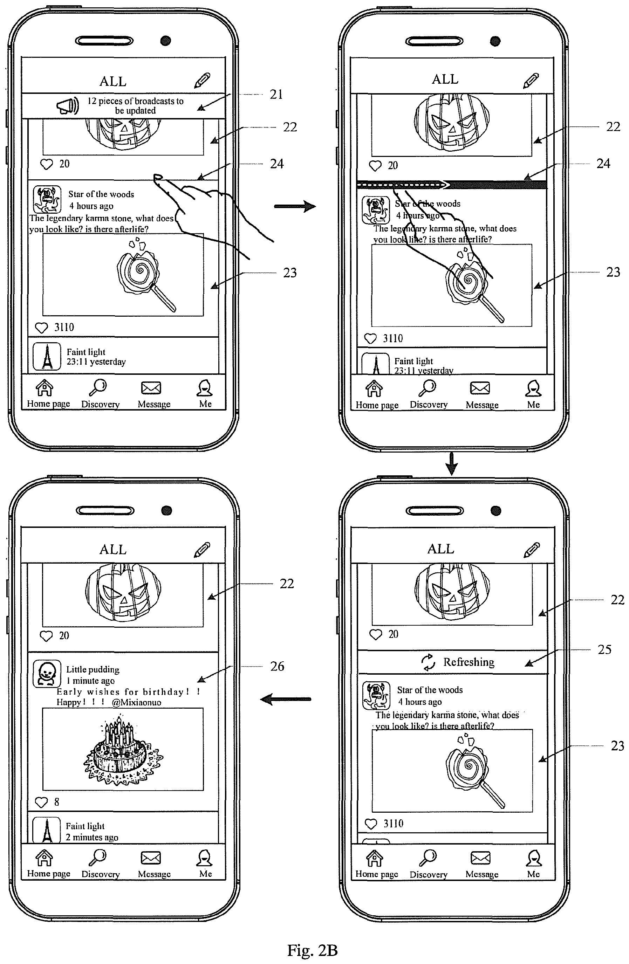

Referring to Fig. 2B, it shows a schematic diagram of a user interface involved in the present embodiment. Generally, the electronic device receives an update notification sent from a server, to notify the electronic device that there is new list data to be updated. After receiving the update notification, the electronic device generates and displays an update prompt message 21. As shown in the figure at upper left in Fig. 2B, the update prompt message 21 may be displayed at top of the page.

If the user needs to refresh the lists to read new list data, triggering is performed with respect to a first list item and a second list item adjacent to each other among N complete or incomplete list items displayed in the current page to generate a triggering signal. An list item update corresponding to list data for updating may be inserted between the first list item and the second list item adjacent to each other which are selected by the user. In addition, a process of the electronic device acquiring the triggering signal may include two possible implementations, and a first possible implementation is described in the present embodiment.

In order to distinguish different list items, adjacent list items are typically separated by a separation line. The separation line may be a line segment, or may be a long strip shaped blank area, or any other patterns for separating different list items.

In the implementation related to the present embodiment, a user may trigger list updating by two operations. A first operation is tapping the separation line in a first displaying state between the first list item and the second list item. In order to prevent an inadvertent operation, the tap operation may be a long press operation. Correspondingly, the electronic device acquires the tap signal acting upon the separation line in the first displaying state between the first list item and the second list item. The first displaying state refers to a normal displaying state.

As shown in the figure at upper left in Fig. 2B, the user long presses a separation line 24 in a first displaying state between a first list item 22 and a second list item 23.

In step 202, the separation line is displayed with a second displaying state according to the tap signal.

After acquiring the tap signal, the electronic device displays the separation line with a second displaying state. The change in the displaying state of the separation line is for prompting the user that an operation corresponding to the change is triggering list updating. The second displaying state may be displaying the separation line as a thicker line, or displaying the separation line in a zipper form, or may be any other displaying states different form the above first displaying state.

As shown in the figure at upper right in Fig. 2B, after the user long presses the separation line 24 in the first displaying state, the electronic device displays the separation line 24 as a thicker line.

In step 203, a sliding signal acting upon the separation line in the second displaying state is acquired.

A second operation by the user is for triggering on the separation line in the second displaying state to generate a sliding signal. A length of the sliding track and a direction of the sliding gesture may be preset depending on practical situations, and the present embodiment does impose specific limitations on this.

As shown in the figure at upper right in Fig. 2B, the user slides on the separation line 24 in the second displaying state from left to right. Correspondingly, as shown in the figure at lower right in Fig.2B, after acquiring the sliding signal, the electronic device displays a refresh prompt message 25 "refreshing" between the first list item 22 and the second list item 23 so as to prompt the user that list refreshing is being performed.

In addition, in order to further prevent an inadvertent operation (i.e., avoiding that the user, when swiping the lists up and down during list data browsing, touches the separation line, thereby causing the electronic device to mistakenly consider that the user needs to update the lists and thus bring confusion and inconvenience in operation for the user), after acquiring the tap signal, the electronic device may further detect whether the N list items are in a stationary state. If the N list items are in the stationary state, the above step 202 is performed. Otherwise, the separation line is kept to be displayed in the first displaying state.

In step 204, at least one list item update is obtained according to list data for updating.

When the electronic device needs to acquire list data for updating from the server, the list data for updating may be acquired from the server after the triggering signal for triggering list updating is acquired, thereby avoiding waste in traffic resource. Or, the list data for updating may be acquired directly from the server and buffered locally after an update notification sent from the server is received, thereby improving the efficiency in loading list item update(s).

After acquiring the list data for updating, the electronic device parses the list data for updating into corresponding list item update(s), and each list item update corresponds to a set of list data for updating.

In step 205, the list item update(s) is(are) loaded between the first list item and the second list item.

Next, the electronic device loads the list item update(s) between the first list item and the second list item selected by the user, and displays at least one complete or incomplete updated list item according to a size of displaying range.

As shown in the figure at lower left in Fig. 2B, after obtaining the list item update(s), the electronic device hides the refreshing prompt message 25, and loads and displays the list item update 26 below the first list item 22.

In addition, since the list item update(s) may be instantly inserted between the first list item and the second list item being browsed by the user, it may facilitate a fast browse of the updated list data for the user, meanwhile it may facilitate a continued browse of the existing list data being previously browsed after the user finishes the browse of the updated list data. In some scenarios, list data is arranged in order according to a user's customary displaying manner. For example, list data is arranged in an order of time parameters. Under these scenarios, after the user finishes the browse of the updated list data, the electronic device may also rearrange the list items contained in the updated list according to ranking parameters corresponding to respective list items and a predetermined ranking condition so as to ensure the list items in good order and to further improve user experience. Therefore, after the above step 205, the method for list updating provided by the present embodiment may also include the following steps.

In step 206, an instruction for rearranging M list items contained in the updated lists is acquired, M≥N+1, and M is an integer.

The rearranging instruction may be triggered by the user himself depending on practical requirements. Alternatively, a list-loading instruction triggered when the user enters the application program next time may be taken as the rearranging instruction.

In step 207, for each list item, a ranking parameter corresponding to the list item is acquired.

After acquiring the rearranging instruction, the electronic device acquires ranking parameters corresponding to respective list items. In practical application, different ranking conditions correspond to different ranking parameters. For example, the ranking parameter may be a time parameter, a distance parameter or a price parameter, and the like.

In a micro-blog application, the ranking parameter is typically a time parameter. Each set of list data contains a time parameter which typically refers to a time stamp corresponding to a moment when a user publishes the piece of micro-blog.

In step 208, the M list items is rearranged according to respective ranking parameters and a predetermined ranking condition.

The predetermined ranking condition is for arranging the list items in an ascending order of the ranking parameters, or, the predetermined ranking condition is for arranging the list items in a descending order of the ranking parameters.

Accordingly, in the method for list updating provided by the present embodiment, updating of list data is triggered by a triggering signal with respect to a first list item and a second list item adjacent to each other displayed in a current page, and at least one list item update is directly loaded between the above first list item and the second list item. The method solves the problem in the related arts that the operation for triggering list updating is complicated, which affects the updating efficiency and influences the continuity in list data browsing. The method simplifies the operation for triggering list updating, and thereby improves the updating efficiency and can guarantee the continuity during list browsing.

In addition, in the method for list updating provided by the present embodiment, an operation manner for triggering list data updating is also provided. A user may determine by himself a position for loading the list item update(s) so as to greatly improve user experience. Further, the list items contained in the updated list may be rearranged according to respective ranking parameters and a predetermined ranking condition, and thus it is guaranteed that the list items are in good order and user experience is further improved.

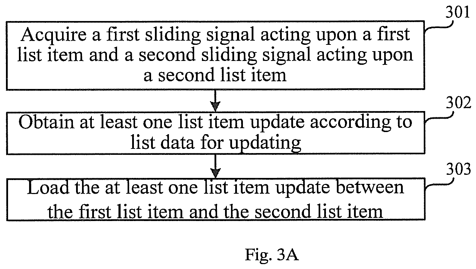

Fig. 3A is a flow chart of a method for list updating according to still another exemplary embodiment. In the present embodiment, the method for list updating is for example applied in an electronic device such as a mobile phone, a tablet, an e-book reader, a multimedia player and a personal digital assistant and the like. The method may include the following steps.

In step 301, a first sliding signal acting upon a first list item and a second sliding signal acting upon a second list item are acquired.

The first list item and the second list item are two adjacent list items among N list items displayed in the current page, N≥2 and N is an integer.

In addition, the first sliding signal and the second sliding signal may be two sliding signals acting simultaneously or in sequence. When the first sliding signal and the second sliding signal are two sliding signals acting simultaneously, a time difference between a triggering moment of the first sliding signal and a triggering moment of the second sliding signal is less than a predetermined time threshold, and in a certain period, both of the first sliding signal and the second sliding signal act on the current page. When the first sliding signal and the second sliding signal are two
sliding signals acting in sequence, the triggering order of the two sliding signals is not limited.

Sliding tracks and sliding directions respectively corresponding to the first sliding signal and the second sliding signal may be preset depending on practical requirements. Optionally, when the first sliding signal and the second sliding signal are two sliding signals in opposite directions, an included angle formed by a reversely extending line in the sliding direction of the first sliding signal and a reversely extending line in the sliding direction of the second sliding signal is greater than a predetermined angle threshold. For example, the predetermined angle threshold may be 170 degree.

In a possible implementation, the first sliding signal is a sliding signal acting upon the first list item in a sliding direction away from the second list item, the second sliding signal is a sliding signal acting upon the second list item in a sliding direction away from the first list item, and the time difference between the triggering moment of the first sliding signal and the triggering moment of the second sliding signal is less than a predetermined time threshold.

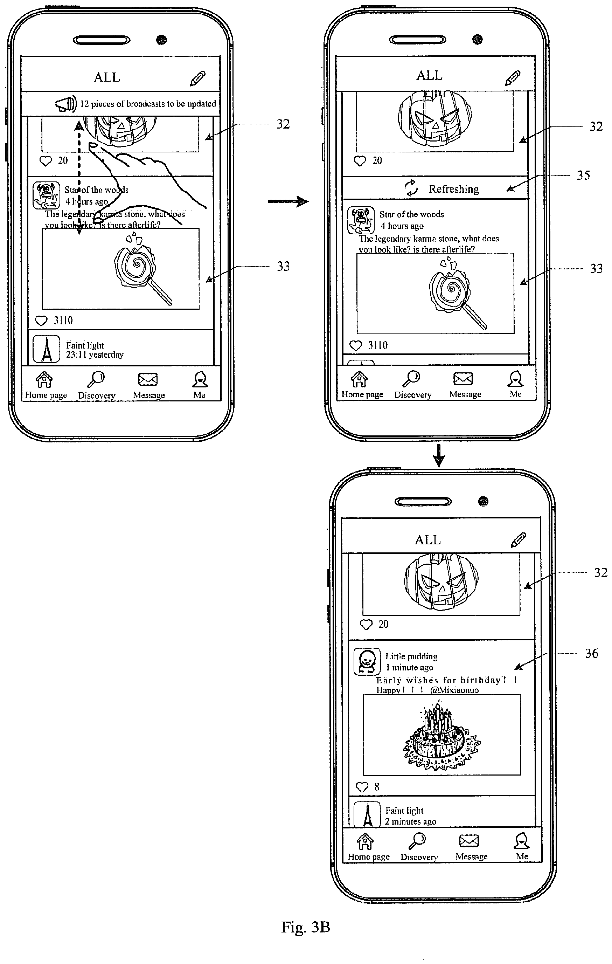

Referring to Fig.3B, it shows a schematic diagram of a user interface involved in the present embodiment. If a user needs to insert list item update(s) corresponding to list data for updating between a first list item and a second list item, he may apply a pair of sliding operations in opposite directions simultaneously on a first list item 32 and a second list item 33. Correspondingly, after acquiring the above two sliding signals, the electronic device distances the two list items along the opposite directions, and displays a refreshing prompt message 35 "refreshing" between the first list item 32 and the second list item 33.

It should be noted that, in different implementations, the first sliding signal may be a sliding signal triggered with respect to the first list item in a first predetermined sliding direction along a first predetermined sliding track, and the second sliding signal may be a sliding signal triggered with respect to the second list item in a second predetermined sliding direction along a second predetermined sliding track. The first predetermined sliding track, the first predetermined sliding direction, the second predetermined sliding track and the second predetermined sliding direction may all be preset according to practical requirements. The present embodiment is illustrated taking one of the above possible implementations as an example. In other possible implementations, the first sliding signal and the second sliding signal may also be two sliding signals acting simultaneously, along a clockwise direction and having a circular sliding track. Or, the first sliding signal and the second sliding signal may also be two sliding signals acting in sequence, along a diagonal direction of a page, and so on. This is not limited in the present embodiment.

In step 302, at least one list item update is obtained according to list data for updating.

When the electronic device needs to acquire list data for updating from the server, the list data for updating may be acquired from the server after the triggering signal for triggering list updating is acquired, thereby avoiding waste in traffic resource. Or, the list data for updating may be acquired directly from the server and buffered locally after an update notification sent from the server is received, thereby improving the efficiency in loading list item update(s).

After acquiring the list data for updating, the electronic device parses the list data for updating into corresponding list item update(s), and each list item update corresponds to a set of list data for updating.

In step 303, the list item update(s) is(are) loaded between the first list item and the second list item.

Next, the electronic device loads the list item update(s) between the first list item and the second list item selected by the user, and displays at least one complete or incomplete updated list item according to a size of displaying range.

As shown in the figured at lower right in Fig. 3B, after obtaining the list item update(s), the electronic device hides the refreshing prompt message 35, and loads and displays the list item update 36 below the first list item 32.

Accordingly, in the method for list updating provided by the present embodiment, updating of list data is triggered by a triggering signal with respect to a first list item and a second list item adjacent to each other displayed in a current page, and at least one list item update is directly loaded between the above first list item and the second list item. The method solves the problem in the related arts that the operation for triggering list updating is complicated, which affects the updating efficiency and influences the continuity in list data browsing. The method simplifies the operation for triggering list updating, and thereby improves the updating efficiency and can guarantee the continuity during list browsing.

In addition, in the method for list updating provided by the present embodiment, a faster and simpler operation manner for triggering the updating of the list data is also provided. A user only needs to draw away two adjacent list items along opposite directions, and then list item update(s) may be inserted between the above two list items selected by the user. The operation is simple, has high updating efficiency and is more consistent with operation customs of users.

It should be noted that, in the embodiments shown in Figs. 2A and 3A, illustrations are made taking two possible operation manners for triggering updating of list data involved in the two embodiments as an example. In practical application, the operation manners for triggering updating of list data may be various. For example, double tapping a separation line between a first list item and a second list item may trigger updating of list data. Or, tapping a certain specified refreshing button may trigger updating of list data, and so on. This is not specifically limited in the embodiments of the present disclosure.

Device embodiments of the present disclosure which may be configured to perform the method embodiments of the present disclosure will be described below. For details that are not disclosed in the device embodiments of the present disclosure, reference may be made to the method embodiments of the present disclosure.

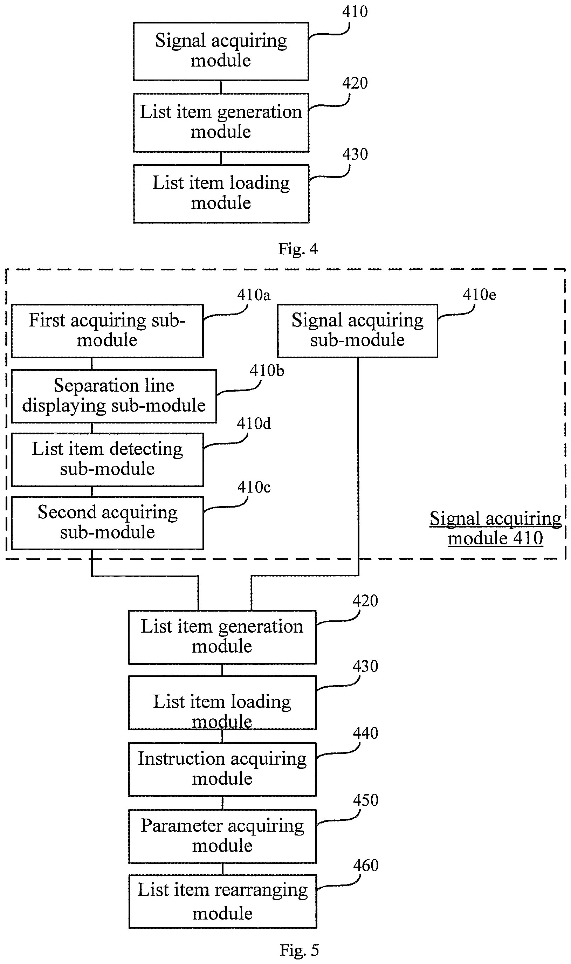

Fig. 4 is a block diagram of a device for list updating according to an exemplary embodiment. The device for list updating may be implemented as a part or a whole of an electronic device such as a mobile phone, a tablet, an e-book reader, a multimedia player and a personal digital assistant and the like in a form of software, hardware or combination of the both. The device for list updating may include a signal acquiring module 410, a list item generation module 420 and a list item loading module 430.

The signal acquiring module 410 is configured to acquire a triggering signal with respect to a first list item and a second list item adjacent to each other among N list items displayed in a current page. The triggering signal serves to trigger updating of list data, N≥2 and N is an integer.

The list item generation module 420 is configured to obtain at least one list item update according to list data for updating.

The list item loading module 430 is configured to load the at least one list item update between the first list item and the second list item.

Accordingly, in the device for list updating provided by the present embodiment, updating of list data is triggered by a triggering signal with respect to a first list item and a second list item adjacent to each other displayed in a current page, and at least one list item update is directly loaded between the above first list item and the second list item. The device solves the problem in the related arts that the operation for triggering list updating is complicated, which affects the updating efficiency and influences the continuity in list data browsing. The device simplifies the operation for triggering list updating, and thereby improves the updating efficiency and can guarantee the continuity during list browsing.

Fig. 5 is a block diagram illustrating a device for list updating according to another exemplary embodiment. The device for list updating may be implemented as a part or a whole of an electronic device such as a mobile phone, a tablet, an e-book reader, a multimedia player and a personal digital assistant and the like in a form of software, hardware or combination of the both. The device for list updating may include a signal acquiring module 410, a list item generation module 420 and a list item loading module 430.

The signal acquiring module 410 is configured to acquire a triggering signal with respect to a first list item and a second list item adjacent to each other among N list items displayed in a current page. The triggering signal serves to trigger updating of list data, N≥2 and N is an integer.

In a first possible implementation, the signal acquiring module 410 includes a first acquiring sub-module 410a, a separation line displaying sub-module 410b and a second acquiring sub-module 410c.

The first acquiring sub-module 410a is configured to acquire a tap signal acting upon a separation line in a first displaying state between the first list item and the second list item.

The separation line displaying sub-module 410b is configured to display the separation line with a second displaying state according to the tap signal.

The second acquiring sub-module 410c is configured to acquire a sliding signal acting upon the separation line in the second displaying state.

Optionally, the signal acquiring module 410 includes a list item detecting sub-module 410d.

The list item detecting sub-module 410d is configured to, after acquiring the tap signal, detect whether the N list items are in a stationary state.

The separation line displaying sub-module 410b is further configured to, if the N list items are in the stationary state, display the separation line with the second displaying state according to the tap signal.

In a second possible implementation, the signal-acquiring module 410 includes a signal acquiring sub-module 410e.

The signal acquiring sub-module 410e is configured to acquire a first sliding signal acting upon the first list item and a second sliding signal acting upon the second list item.

Optionally, the first sliding signal is a sliding signal acting upon the first list item in a sliding direction away from the second list item, the second sliding signal is a sliding signal acting upon the second list item in a sliding direction away from the first list item, and a time difference between a triggering moment of the first sliding signal and a triggering moment of the second sliding signal is less than a predetermined time threshold.

The list item generation module 420 is configured to obtain at least one list item update according to list data for updating.

The list item loading module 430 is configured to load the at least one list item update between the first list item and the second list item.

In addition, optionally, the device further includes an instruction acquiring module 440, a parameter acquiring module 450 and a list item rearranging module 460.

The instruction acquiring module 440 is configured to acquire an instruction for rearranging M list items contained in the updated lists, M≥N+1 and M is an integer.

The parameter acquiring module 450 is configured to, for each list item, acquire a ranking parameter corresponding to the list item.

The list item rearranging module 460 is configured to rearrange the M list items according to respective ranking parameters and a predetermined ranking condition.

The predetermined ranking condition is for arranging the list items in an ascending order of the ranking parameters, or, the predetermined ranking condition is for arranging the list items in a descending order of the ranking parameters.

Accordingly, in the device for list updating provided by the present embodiment, updating of list data is triggered by a triggering signal with respect to a first list item and a second list item adjacent to each other displayed in a current page, and at least one list item update is directly loaded between the above first list item and the second list item. The device solves the problem in the related arts that the operation for triggering list updating is complicated, which affects the updating efficiency and influences the continuity in list data browsing. The device simplifies the operation for triggering list updating, and thereby improves the updating efficiency and can guarantee the continuity during list browsing.

In addition, in the device for list updating provided by the present embodiment, two operation manners for triggering updating of list data are also provided. For either of the operation manners, a user may determine by himself a position for loading the list item update(s) so as to greatly improve user experience. Further, respective list items contained in the updated lists may be rearranged according to respective ranking parameters and a predetermined ranking condition, and thus it is guaranteed that the list items are in good order and user experience is further improved.

With respect to the device in the above embodiment, specific operations performed by each module have been described in detail in the embodiments of related method, and detailed descriptions are omitted here.

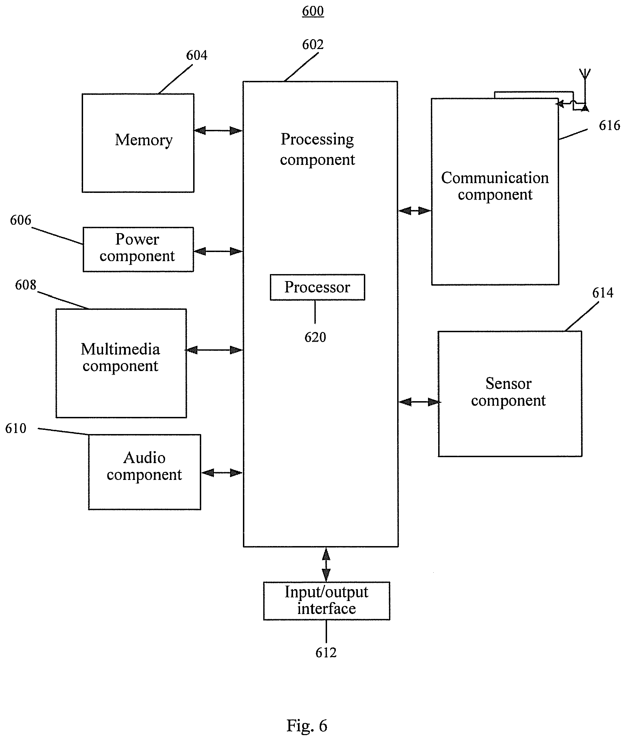

Fig. 6 is a block diagram of a device 600 for list updating according to an exemplary embodiment. For example, the device 600 may be a mobile phone, a computer, a digital broadcast terminal, a messaging device, a gaming console, a tablet, a medical device, exercise equipment, a personal digital assistant, and the like.

Referring to Fig. 6, the device 600 may include one or more of the following components: a processing component 602, a memory 604, a power component 606, a multimedia component 608, an audio component 610, an input/output (I/O) interface 612, a sensor component 614, and a communication component 616.

The processing component 602 typically controls overall operations of the device 600, such as the operations associated with display, telephone calls, data communications, camera operations, and recording operations. The processing component 602 may include one or more processors 620 to execute instructions to perform all or part of the steps in the above described methods. Moreover, the processing component 602 may include one or more modules which facilitate the interaction between the processing component 602 and other components. For instance, the processing component 602 may include a multimedia module to facilitate the interaction between the multimedia component 608 and the processing component 602.

The memory 604 is configured to store various types of data to support the operation of the device 600. Examples of such data include instructions for any applications or methods operated on the device 600, contact data, phonebook data, messages, pictures, video, etc. The memory 604 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 606 provides power to various components of the device 600. The power component 606 may include a power management system, one or more power sources, and any other components associated with the generation, management, and distribution of power in the device 600.

The multimedia component 608 includes a screen providing an output interface between the device 600 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 608 includes a front camera and/or a rear camera. The front camera and the rear camera may receive an external multimedia datum while the device 600 is in an operation mode, such as a photographing mode or a video mode. Each of the front camera and the rear camera may be a fixed optical lens system or have focus and optical zoom capability.

The audio component 610 is configured to output and/or input audio signals. For example, the audio component 610 includes a microphone ("MIC") configured to receive an external audio signal when the device 600 is in an operation mode, such as a call mode, a recording mode, and a voice recognition mode. The received audio signal may be further stored in the memory 604 or transmitted via the communication component 616. In some embodiments, the audio component 610 further includes a speaker to output audio signals.

The I/O interface 612 provides an interface between the processing component 602 and peripheral interface modules, such as a keyboard, a tap wheel, buttons, and the like. The buttons may include, but are not limited to, a home button, a volume button, a starting button, and a locking button.

The sensor component 614 includes one or more sensors to provide status assessments of various aspects of the device 600. For instance, the sensor component 614 may detect an open/closed status of the device 600, relative positioning of components, e.g., the display and the keypad, of the device 600, a change in position of the device 600 or a component of the device 600, a presence or absence of user contact with the device 600, an orientation or an acceleration/deceleration of the device 600, and a change in temperature of the device 600. The sensor component 614 may include a proximity sensor configured to detect the presence of nearby objects without any physical contact. The sensor component 614 may also include a light sensor, such as a CMOS or CCD image sensor, for use in imaging applications. In some embodiments, the sensor component 614 may also include an accelerometer sensor, a gyroscope sensor, a magnetic sensor, a pressure sensor, or a temperature sensor.

The communication component 616 is configured to facilitate communication, wired or wirelessly, between the device 600 and other devices. The device 600 can access a wireless network based on a communication standard, such as WiFi, 2G, or 3G, or a combination thereof. In one exemplary embodiment, the communication component 616 receives a broadcast signal or broadcast associated information from an external broadcast management system via a broadcast channel. In one exemplary embodiment, the communication component 616 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 600 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the methods for list updating as shown in above Figs. 1, 2A or 3A.

In exemplary embodiments, there is also provided a non-transitory computer-readable storage medium including instructions, such as included in the memory 604, executable by the processor 620 in the device 600, for performing the methods for list updating as shown in above Figs. 1, 2A or 3A. For example, the non-transitory computer-readable storage medium may be a ROM, a RAM, a CD-ROM, a magnetic tape, a floppy disc, an optical data storage device, and the like.

A non-transitory computer readable storage medium is provided. When instructions in the storage medium are executed by a processor of the device 600, the device 600 is enabled to perform the methods for list updating as shown in above Figs. 1, 2A or 3A.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. It is intended that the specification and examples be considered as exemplary only, with a true scope of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A method implemented by an electronic device for list updating upon receiving an update notification from a server comprising:
acquiring (102) a triggering signal with respect to a first list item and a second list item adjacent to each other among N list items displayed in a current page, the triggering signal serving to trigger updating of list data, N≥2 and N being an integer, wherein the triggering signal is a tap signal acting upon a separation line in a first displaying state between the first list item and the second list item;
detecting whether the N list items are in a stationary state,
if the N list items are in the stationary state, the method further comprises:
- displaying (202) the separation line with a second displaying state according to the tap signal, said second displaying state being different from the first displaying state;
- acquiring (203) a sliding signal acting upon the separation line in the second displaying state;
- obtaining (104) at least one list item update according to list data for updating; and
- loading (106) the at least one list item update between the first list item and the second list item; and
if the N list items are not in the stationary state, keeping display of the separation line in the first displaying state.

2. The method according to claim 1, **characterized in that**, the method further comprises:
acquiring (206) an instruction for rearranging M list items contained in the updated lists, M≥N+1 and M being an integer;
for each list item, acquiring (207) a ranking parameter corresponding to the list item;
rearranging (208) the M list items according to respective ranking parameters and a predetermined ranking condition;
wherein the predetermined ranking condition is for arranging the list items in an ascending order of the ranking parameters, or, the predetermined ranking condition is for arranging the list items in a descending order of the ranking parameters.

3. A device for list updating upon receiving an update notification from a server, comprising:
a signal acquiring module (410) configured to acquire a triggering signal with respect to a first list item and a second list item adjacent to each other among N list items displayed in a current page, the triggering signal serving to trigger updating of list data, N≥2 and N being an integer;
the device being **characterized in that**, the signal acquiring module (410) comprises:
a first acquiring sub-module (410a) configured to acquire a tap signal acting upon a separation line in a first displaying state between the first list item and the second list item;
a list item detecting sub-module (410d) configured to, after the tap signal is acquired, detect whether the N list items are in a stationary state;
a separation line displaying sub-module (410b) configured to, if the N list items are in the stationary state, display the separation line with a second displaying state according to the tap signal, said second displaying state being different from the first displaying state; and
a second acquiring sub-module (410c) configured to , if the N list items are in the stationary state, acquire a sliding signal acting upon the separation line in the second displaying state,
said device further comprising:
a list item generation module (420) configured to, if the N list items are in the stationary state, obtain at least one list item update according to list data for updating; and
a list item loading module (430) configured to, if the N list items are in the stationary state, load the at least one list item update between the first list item and the second list item;
wherein if the N list items are not in the stationary state, the device is configured to keep displaying the separation line in the first displaying state.

4. The device according to claim 3, **characterized in that**, the device further comprises:
an instruction acquiring module (440) configured to acquire an instruction for rearranging M list items contained in the updated lists, M≥N+1 and M being an integer;
a parameter acquiring module (450) configured to, for each list item, acquire a ranking parameter corresponding to the list item;
a list item rearranging module (460) configured to rearrange the M list items according to respective ranking parameters and a predetermined ranking condition;
wherein the predetermined ranking condition is for arranging the list items in an ascending order of the ranking parameters, or, the predetermined ranking condition is for arranging the list items in a descending order of the ranking parameters.

5. A computer program including instructions for executing the steps of a method for list updating according to claim 1 or 2 when said program is executed by a computer.

6. A recording medium readable by a computer and having recorded thereon a computer program including instructions for executing the steps of a method for list updating according to claim 1 or 2 when said program is executed by a computer.

## Patentansprüche

1. Verfahren, das von einer elektronischen Vorrichtung zum Listenaktualisieren beim Empfangen einer Aktualisierungsbenachrichtigung von einem Server implementiert wird, umfassend:
Erfassen (102) eines Auslösesignals in Bezug auf ein erstes Listenelement und ein zweites Listenelement nebeneinander unter N Listenelementen, die auf einer aktuellen Seite angezeigt werden, wobei das Auslösesignal dazu dient, eine Aktualisierung von Listendaten auszulösen, N ≥ 2 und N eine ganze Zahl ist, wobei das Auslösesignal ein Abgriffssignal ist, das auf eine Trennlinie in einem ersten Anzeigezustand zwischen dem ersten Listenelement und dem zweiten Listenelement einwirkt,
Ermitteln, ob sich die N Listenelemente in einem stationären Zustand befinden,
wenn sich die N Listenelemente in dem stationären Zustand befinden, umfasst das Verfahren ferner:
- Anzeigen (202) der Trennlinie mit einem zweiten Anzeigezustand gemäß dem Abgriffssignal, wobei der zweite Anzeigezustand von dem ersten Anzeigezustand verschieden ist,
- Erfassen (203) eines auf die Trennlinie in dem zweiten Anzeigezustand einwirkenden Schiebesignals,
- Erlangen (104) mindestens einer Listenelementaktualisierung gemäß Listendaten zum Aktualisieren und
- Laden (106) der mindestens einen Listenelementaktualisierung zwischen dem ersten Listenelement und dem zweiten Listenelement, und
wenn sich die N Listenelemente nicht in dem stationären Zustand befinden, Beibehalten einer Anzeige der Trennlinie in dem ersten Anzeigezustand.

2. Verfahren nach Anspruch 1, **dadurch gekennzeichnet, dass** das Verfahren ferner umfasst:
Erfassen (206) einer Anweisung zum Umordnen von M Listenelementen, die in den aktualisierten Listen enthalten sind, wobei M ≥ N + 1 und M eine ganze Zahl ist,
Erfassen (207) eines dem Listenelement entsprechenden Rangordnungsparameters für jedes Listenelement,
Umordnen (208) der M Listenelemente gemäß den jeweiligen Rangordnungsparametern und einer vorbestimmten Rangordnungsbedingung,
wobei die vorbestimmte Rangordnungsbedingung zum Anordnen der Listenelemente in einer aufsteigenden Reihenfolge der Rangordnungsparameter dient, oder die vorbestimmte Rangordnungsbedingung zum Anordnen der Listenelemente in einer absteigenden Reihenfolge der Rangordnungsparameter dient.

3. Vorrichtung zum Listenaktualisieren beim Empfangen einer Aktualisierungsbenachrichtigung von einem Server, umfassend:
ein Signalerfassungsmodul (410), das dazu ausgestaltet ist, ein Auslösesignal in Bezug auf ein erstes Listenelement und ein zweites Listenelement nebeneinander unter N Listenelementen, die auf einer aktuellen Seite angezeigt werden, zu erfassen, wobei das Auslösesignal dazu dient, eine Aktualisierung von Listendaten auszulösen, N ≥ 2 und N eine ganze Zahl ist,
wobei die Vorrichtung dadurch ausgezeichnet ist, dass das Signalerfassungsmodul (410) umfasst:
ein erstes Erfassungsuntermodul (410a), das dazu ausgestaltet ist, ein Abgriffssignal zu erfassen, das auf eine Trennlinie in einem ersten Anzeigezustand zwischen dem ersten Listenelement und dem zweiten Listenelement einwirkt,
ein Listenelementermittlungs-Untermodul (410d), das dazu ausgestaltet ist, nachdem das Abgriffssignal erfasst worden ist, zu ermitteln, ob sich die N Listenelemente in einem stationären Zustand befinden,
ein Trennlinienanzeige-Untermodul (410b), das dazu ausgestaltet ist, wenn sich die N Listenelemente in dem stationären Zustand befinden, die Trennlinie mit einem zweiten Anzeigezustand gemäß dem Abgriffssignal anzuzeigen, wobei der zweite Anzeigezustand von dem ersten Anzeigezustand verschieden ist, und
ein zweites Erfassungsuntermodul (410c), das dazu ausgestaltet ist, wenn sich die N Listenelemente in dem stationären Zustand befinden, ein auf die Trennlinie in dem zweiten Anzeigezustand einwirkendes Schiebesignal zu erfassen,
wobei die Vorrichtung ferner umfasst:
ein Listenelement-Erzeugungsmodul (420), das dazu ausgestaltet ist, wenn sich die N Listenelemente in dem stationären Zustand befinden, mindestens eine Listenelementaktualisierung gemäß Listendaten zum Aktualisieren zu erlangen, und
ein Listenelement-Lademodul (430), das dazu ausgestaltet ist, wenn sich die N Listenelemente in dem stationären Zustand befinden, die mindestens eine Listenelementaktualisierung zwischen dem ersten Listenelement und dem zweiten Listenelement zu laden,
wobei, wenn sich die N Listenelemente nicht in dem stationären Zustand befinden, die Vorrichtung dazu ausgestaltet ist, die Anzeige der Trennlinie in dem ersten Anzeigezustand beizubehalten.

4. Vorrichtung nach Anspruch 3, **dadurch gekennzeichnet, dass** die Vorrichtung ferner umfasst:
ein Anweisungserfassungsmodul (440), das dazu ausgestaltet ist, eine Anweisung zum Umordnen von M Listenelementen, die in den aktualisierten Listen enthalten sind, zu erfassen, wobei M ≥ N + 1 und M eine ganze Zahl ist,
ein Parametererfassungsmodul (450), das dazu ausgestaltet ist, für jedes Listenelement einen Rangordnungsparameter zu erfassen, der dem Listenelement entspricht,
ein Listenelement-Umordnungsmodul (460), das dazu ausgestaltet ist, die M Listenelemente gemäß jeweiligen Rangordnungsparametern und einer vorbestimmten Rangordnungsbedingung umzuordnen,
wobei die vorbestimmte Rangordnungsbedingung zum Anordnen der Listenelemente in einer aufsteigenden Reihenfolge der Rangordnungsparameter dient, oder die vorbestimmte Rangordnungsbedingung zum Anordnen der Listenelemente in einer absteigenden Reihenfolge der Rangordnungsparameter dient.

5. Computerprogramm, das Anweisungen zum Ausführen der Schritte eines Verfahrens zum Listenaktualisieren nach Anspruch 1 oder 2 beinhaltet, wenn das Programm von einem Computer ausgeführt wird.

6. Aufzeichnungsmedium, das von einem Computer gelesen werden kann und auf dem ein Computerprogramm aufgezeichnet ist, das Anweisungen zum Ausführen der Schritte eines Verfahrens zum Listenaktualisieren nach Anspruch 1 oder 2 beinhaltet, wenn das Programm von einem Computer ausgeführt wird.

## Revendications

1. Procédé mis en œuvre par un dispositif électronique pour la mise à jour de liste lors de la réception d'une notification de mise à jour en provenance d'un serveur comprenant :
l'acquisition (102) d'un signal de déclenchement par rapport à un premier article de liste et un second article de liste adjacents l'un à l'autre parmi N articles de liste affichés dans une page en cours, le signal de déclenchement servant à déclencher la mise à jour de données de liste, N≥2 et N étant un entier, où le signal de déclenchement est un signal de tapotement agissant sur une ligne de séparation dans un premier état d'affichage entre le premier article de liste et le second article de liste ;
la détection de si les N articles de liste sont dans un état stationnaire,
si les N articles de liste sont dans l'état stationnaire, le procédé comprend en outre :
- l'affichage (202) de la ligne de séparation avec un second état d'affichage en fonction du signal de tapotement, ledit second état d'affichage étant différent du premier état d'affichage ;
- l'acquisition (203) d'un signal de glissement agissant sur la ligne de séparation dans le second état d'affichage ;
- l'obtention (104) d'au moins une mise à jour d'article de liste en fonction de données de liste à mettre à jour ; et
- le chargement (106) de l'au moins une mise à jour d'article de liste entre le premier article de liste et le second article de liste ; et
si les N articles de liste ne sont pas dans l'état stationnaire, la conservation de l'affichage de la ligne de séparation dans le premier état d'affichage.

2. Procédé selon la revendication 1, **caractérisé en ce que**, le procédé comprend en outre :
l'acquisition (206) d'une instruction pour réagencer M articles de liste contenus dans les listes mises à jour, M≥N + 1 et M étant un entier ;
pour chaque article de liste, l'acquisition (207) d'un paramètre de classement correspondant à l'article de liste ;
le réagencement (208) des M articles de liste en fonction de paramètres de classement respectifs et d'une condition de classement prédéterminée ;
dans lequel la condition de classement prédéterminée est destinée à agencer les articles de liste dans un ordre croissant des paramètres de classement, ou, la condition de classement prédéterminée est destinée à agencer les articles de liste dans un ordre décroissant des paramètres de classement.

3. Dispositif pour la mise à jour de liste lors de la réception d'une notification de mise à jour en provenance d'un serveur, comprenant :
un module d'acquisition de signal (410) configuré pour acquérir un signal de déclenchement par rapport à un premier article de liste et un second article de liste adjacents l'un à l'autre parmi N articles de liste affichés dans une page en cours, le signal de déclenchement servant à déclencher la mise à jour de données de liste, N≥2 et N étant un entier ;
le dispositif étant **caractérisé en ce que**, le module d'acquisition de signal (410) comprend :
un premier sous-module d'acquisition (410a) configuré pour acquérir un signal de tapotement agissant sur une ligne de séparation dans un premier état d'affichage entre le premier article de liste et le second article de liste ;
un sous-module de détection d'article de liste (410d) configuré pour, après que le signal de tapotement est acquis, détecter si les N articles de liste sont dans un état stationnaire ;
un sous-module d'affichage de ligne de séparation (410b) configuré pour, si les N articles de liste sont dans l'état stationnaire, afficher la ligne de séparation avec un second état d'affichage en fonction du signal de tapotement, ledit second état d'affichage étant différent du premier état d'affichage ; et
un second sous-module d'acquisition (410c) configuré pour, si les N articles de liste sont dans l'état stationnaire, acquérir un signal de glissement agissant sur la ligne de séparation dans le second état d'affichage,
ledit dispositif comprenant en outre :
un module de génération d'article de liste (420) configuré pour, si les N articles de liste sont dans l'état stationnaire, obtenir au moins une mise à jour d'article de liste en fonction de données de liste à mettre à jour ; et
un module de chargement d'article de liste (430) configuré pour, si les N articles de liste sont dans l'état stationnaire, charger l'au moins une mise à jour d'article de liste entre le premier article de liste et le second article de liste ;
dans lequel si les N articles de liste ne sont pas dans l'état stationnaire, le dispositif est configuré pour conserver l'affichage de la ligne de séparation dans le premier état d'affichage.

4. Dispositif selon la revendication 3, **caractérisé en ce que**, le dispositif comprend en outre :
un module d'acquisition d'instruction (440) configuré pour acquérir une instruction pour réagencer M articles de liste contenus dans les listes mises à jour, M≥N + 1 et M étant un entier ;
un module d'acquisition de paramètre (450) configuré pour, pour chaque article de liste, acquérir un paramètre de classement correspondant à l'article de liste ;
un module de réagencement d'article de liste (460) configuré pour réagencer les M articles de liste en fonction de paramètres de classement respectifs et d'une condition de classement prédéterminée ;
dans lequel la condition de classement prédéterminée est destinée à agencer les articles de liste dans un ordre croissant des paramètres de classement, ou, la condition de classement prédéterminée est destinée à agencer les articles de liste dans un ordre décroissant des paramètres de classement.

5. Programme d'ordinateur incluant des instructions pour exécuter les étapes d'un procédé pour la mise à jour de liste selon la revendication 1 ou 2 lorsque ledit programme est exécuté par un ordinateur.

6. Support d'enregistrement lisible par un ordinateur et sur lequel est enregistré un programme d'ordinateur incluant des instructions pour exécuter les étapes d'un procédé pour la mise à jour de liste selon la revendication 1 ou 2 lorsque ledit programme est exécuté par un ordinateur.
